(19) **Europäisches Patentamt European Patent Office Office européen des brevets**

(11) **EP 4 670 895 A1**

(12) **EUROPEAN PATENT APPLICATION**
published in accordance with Art. 153(4) EPC

(43) Date of publication:
**31.12.2025 Bulletin 2026/01**

(21) Application number: **24810690.8**

(22) Date of filing: **18.03.2024**

(51) International Patent Classification (IPC):
**B23K 9/173** (2006.01)    **B23K 9/00** (2006.01)
**B23K 9/16** (2006.01)    **B23K 35/30** (2006.01)

(52) Cooperative Patent Classification (CPC):
**B23K 9/00; B23K 9/16; B23K 9/173; B23K 35/30**

(86) International application number:
**PCT/JP2024/010618**

(87) International publication number:
**WO 2024/241682 (28.11.2024 Gazette 2024/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.05.2023 JP 2023083862**

(71) Applicant: **JFE Steel Corporation Tokyo, 100-0011 (JP)**

(72) Inventors:
• **Nagao, Ryota**
  **Tokyo 100-0011 (JP)**
• **Konishi, Kyohei**
  **Tokyo 100-0011 (JP)**
• **Kozuki, Shohei**
  **Tokyo 100-0011 (JP)**
• **Taniguchi, Koichi**
  **Tokyo 100-0011 (JP)**

(74) Representative: **Haseltine Lake Kempner LLP Bürkleinstrasse 10 80538 München (DE)**

(54) **NARROW-GROOVE GAS-SHIELDED ARC WELDING METHOD**

(57)    Provided is a narrow-groove gas-shielded arc welding method that can provide a high welding operation efficiency and can ensure a sufficiently high strength of a weld metal.

A narrow-groove gas-shielded arc welding method includes joining steel plates together by narrow-groove multi-layer welding, the steel plates having a thickness t of 22 mm or greater, the narrow-groove multi-layer welding using a groove angle $\theta$ of 25° or less and a groove root gap G of 7 mm to 18 mm. In the method, the multi-layer welding is multi-electrode welding using three or more electrodes; welding wires have respective equivalent carbon contents (Ceq), and an average value of the equivalent carbon contents is 0.400 mass% or greater, where the equivalent carbon contents are each defined by equation (1) below, and where the average value is determined by dividing a sum of the equivalent carbon contents by the number of electrodes; the electrodes have respective amounts of heat input, and a ratio of a maximum to a minimum of the amounts of heat input is 1.40 or less, and a sum of the amounts of heat input of the electrodes is 10 kJ/cm to 60 kJ/cm. Ceq = [C] + [Si]/24 + [Mn]/6 + [Ni]/40 + [Cr]/5 + [Mo]/4 + [V]/14 (1)

FIG. 1

## Description

Technical Field

The present invention relates to a gas-shielded arc welding method and, in particular, to a narrow-groove gas-shielded arc welding method that is applied to steel plates having a thickness of 22 mm or greater and can ensure a tensile strength of a weld metal of 550 MPa or greater. As referred to herein, a "narrow groove" is a groove that has a groove angle of 25° or less and in which a width of a minimum groove gap between steel plates that are materials to be welded (base steels) is 50% or less of a thickness of the steel plates.

Background Art

Gas-shielded arc welding, which is used for the operation of welding steel plates, is typically performed by a consumable electrode technique that uses $CO_2$ gas alone or a mixed gas of Ar and $CO_2$ to shield the melted area. Gas-shielded arc welding is widely used in the fields of manufacturing, such as automobiles, buildings, bridges, and electrical equipment.

Steel structures have increased in size and thickness in recent years, and thus, regarding the welding used in the process of their manufacture, particularly, the butt welding of steel plates, an amount of weld deposition has increased, and the welding operation has become very time-consuming, which have resulted in an increase in the cost of the operation.

One possible approach for overcoming this is to use narrow-groove gas-shielded arc welding that performs, by arc welding, multi-layer welding on a groove having a small gap with respect to a thickness. Compared with typical gas-shielded arc welding, narrow-groove gas-shielded arc welding is expected to reduce the amount of weld deposition, enable high efficiency and energy saving for welding, and, consequently, reduce the cost of the operation.

Recently, a technology for performing narrow-groove gas-shielded arc welding with multiple electrodes has been proposed. With multi-electrode welding, the amount of deposition per pass of the metal that is deposited to fill the groove can be increased, and, therefore, a high welding efficiency can be achieved compared with single-electrode welding. Accordingly, multi-electrode welding is an effective means for increasing the efficiency of welding.

Patent Literature 1, for example, discloses a narrow-groove gas-shielded arc welding method for joining steel plates with narrow-groove multi-layer welding. In the case of Patent Literature 1, welding for forming the first layer is performed by multi-electrode welding using two or more electrodes. Patent Literature 1 states that a first electrode and a second electrode are positioned along predetermined parallel weld lines and that a distance between ends of the welding wires of the first electrode and the second electrode is controlled to be within a range of 5 mm to 16 mm. Patent Literature 1 also states that an angle of a straight line with respect to a direction perpendicular to the weld lines is controlled to be within a range of 45° or less, where the straight line is a line connecting the ends of the welding wires of the first electrode and the second electrode to each other. Patent Literature 1 states that these techniques provide effects of preventing welding defects and improving welding operation efficiency even in a case where groove cutting, for instance, by gas cutting or plasma cutting, has been performed.

Citation List

Patent Literature

PTL 1: Japanese Patent No. 6137053

Summary of Invention

Technical Problem

Unfortunately, the technology disclosed in Patent Literature 1 cannot ensure a sufficient tensile strength in cases where the base steel is a high strength steel and, in particular, where a high strength, specifically a tensile strength of 550 MPa or greater, is required in the weld.

The present invention takes into account the technology of the related art and has an object of providing a narrow-groove gas-shielded arc welding method that can provide a high welding operation efficiency and can ensure a sufficiently high strength of a weld metal.

Solution to Problem

To achieve the object, the present inventors conducted studies regarding welding methods for improving the strength of the weld metal. As a result, the present inventors found the following important points: welding wires have respective equivalent carbon contents, and an average value of the equivalent carbon contents should be 0.400 mass% or greater, where the average value is determined by dividing the equivalent carbon contents by the number of wires; the electrodes have respective amounts of heat input, and a ratio of the maximum to the minimum of the amounts of heat input should be 1.40 or less; and the sum of the amounts of heat input should be 10 kJ/cm to 60 kJ/cm.

The present invention was made based on these findings and with further studies, and primary features of the present invention are as follows.

[1] A narrow-groove gas-shielded arc welding method including joining steel plates together by narrow-groove multi-layer welding, the steel plates having a thickness t of 22 mm or greater, the narrow-groove multi-layer welding using a groove angle $\theta$ of 25° or less and a groove root gap G of 7 mm to 18 mm, wherein the multi-layer welding is multi-electrode welding using three or more electrodes; welding wires have respective equivalent carbon contents (Ceq), and an average value of the equivalent carbon contents is 0.400 mass% or greater, where the equivalent carbon contents are each defined by equation (1) below, and where the average value is determined by dividing a sum of the equivalent carbon contents by the number of electrodes; the electrodes have respective amounts of heat input, and a ratio of a maximum to a minimum of the amounts of heat input is 1.40 or less; and a sum of the amounts of heat input of the electrodes is 10 kJ/cm to 60 kJ/cm:

$$Ceq = [C] + [Si]/24 + [Mn]/6 + [Ni]/40 + [Cr]/5 + [Mo]/4 + [V]/14 \tag{1}$$

where [element] indicates a content (mass%) of the element in each of the welding wires, and when the element is not included, 0 is substituted.

[2] The narrow-groove gas-shielded arc welding method according to [1], wherein one of a first electrode and a second electrode is electrode-negative (has straight polarity), and the other is electrode-positive (has reverse polarity); a distance a between ends of welding wires supplied through contact tips disposed at ends of respective welding torches of the first electrode and the second electrode is 5 mm to 16 mm; an angle $\alpha$ of a straight line with respect to a groove width direction is 60° or less, where the straight line is a line connecting the ends of the welding wires of the first electrode and the second electrode to each other; a diameter of the welding wires that are used in the electrodes is within a range of 1.0 mm to 1.6 mm; and a distance between adjacent electrodes for the second electrode and one or more additional electrodes is 10 mm to 100 mm.

[3] The narrow-groove gas-shielded arc welding method according to [2], wherein a third electrode and optionally additional electrodes are positioned behind the first electrode and the second electrode and in a middle of the groove.

[4] The narrow-groove gas-shielded arc welding method according to any one of [1] to [3], wherein a mixed gas containing $CO_2$ gas in an amount of 20 vol.% or greater is used as a shielding gas.

[5] The narrow-groove gas-shielded arc welding method according to any one of [1] to [4], wherein at least one welding wire used in a straight-polarity electrode contains one or more rare earth metals (REM) in an amount of 0.005 mass% to 0.060 mass%.

Advantageous Effects of Invention

Regarding the operation of gas-shielded arc welding of narrow-groove multi-layer welding, which has high welding efficiency, even when the weld metal of a joint is required to have a tensile strength of greater than 550 MPa, the present invention can sufficiently address the need. In addition, a narrow-groove gas-shielded arc-welded joint produced by the operation has a significantly lower cost of manufacturing than existing welded joints and, therefore, has an effect in that it is very useful to employ the joint in general structures such as buildings, bridges, and ships, among others.

Brief Description of Drawings

[Fig. 1] Fig. 1 is a diagram schematically illustrating a shape of a groove used in the present invention.
[Fig. 2] Fig. 2 is a diagram illustrating an example of an operation procedure of the present invention for performing a welding operation with four electrodes; Fig. 2(a) is a front view, and Fig. 2(b) is a top view.

Description of Embodiments

The present invention will be described in detail below.
The present invention is a narrow-groove gas-shielded arc welding method including joining steel plates together by narrow-groove multi-layer welding, the steel plates having a thickness t of 22 mm or greater, the narrow-groove multi-layer welding using a groove angle θ of 25° or less and a groove root gap G of 7 mm to 18 mm. As referred to herein, "steel plates" include thick-walled steel materials, thick-plate steel materials, and the like.

[Thickness t of Steel Plate: 22 mm or greater]

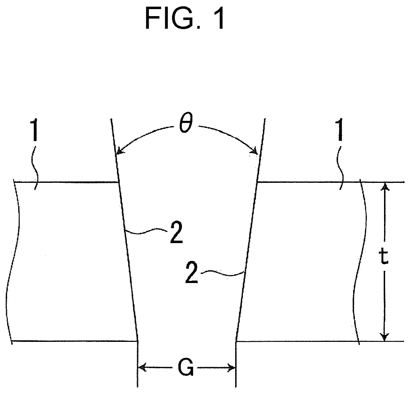

The thickness t (see Fig. 1) of a steel plate 1 is 22 mm or greater. When the thickness t is less than 22 mm, a conventional single bevel groove may have a smaller groove cross-sectional area than the groove of concern of the present invention in some cases in which the single bevel groove is formed to have a small groove gap, which can be achieved by increasing the groove angle; consequently, welding with the single bevel groove provides higher efficiency and a lower amount of weld deposition than with the groove of concern. Preferably, the thickness t is 30 mm or greater.
Furthermore, since the steel plate thickness of steel structures, including special structures, is at most 200 mm in many cases, it is preferable that in the present invention, the upper limit of the thickness t of the steel plate be 200 mm.
Furthermore, the present invention can be applied to various types of steel plates, ranging from mild steel plates to 780 MPa-class high-tensile-strength steel plates. Even 590 MPa-class high-tensile-strength steel plates can be welded without being preheated.

[Groove Angle θ: 25° or less]

The groove used in the present invention has a shape of a narrow groove, such as a V-shaped groove or an I-shaped groove (possibly θ = 0°), that has a gap in the root. Fig. 1 illustrates an example of a V-shaped groove having a gap in the root. In the figure, the steel plate (base steel) is indicated by 1, and a groove surface is indicated by 2. Regarding a groove cross-sectional area of a groove portion of the steel plate 1, the smaller the cross-sectional area, the more efficiently the welding can be performed, but the greater the likelihood of the occurrence of defects, such as lack of fusion. When the groove angle θ of the groove portion is greater than 25°, welding can be carried out by a conventional operation method. Accordingly, the present invention is directed to cases where the groove angle θ is 25° or less, which are cases where operation with a conventional operation method is difficult and which are expected to provide higher efficiency. Regarding the V-shaped groove, when the groove angle θ is 0°, the groove is called an I-shaped groove. This case of 0° provides the maximum efficiency in terms of the amount of weld deposition. However, welding heat distortion may cause the groove to close during welding, and, therefore, it is preferable to take this into account and set a groove angle θ in accordance with the thickness t. When the thickness t is greater than 100 mm, it is preferable that the upper limit of the preferred range be 10°. More preferably, the groove angle θ is 5° to 10°.

[Groove Root Gap G: 7 mm to 18 mm]

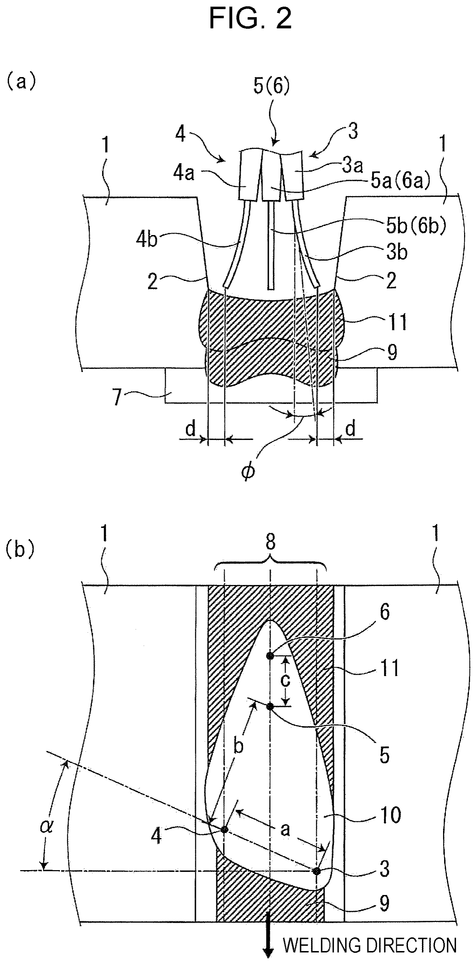

Regarding the groove portion of the steel plate, the smaller it is, the faster and more efficiently the welding can be performed, but the greater the likelihood of the occurrence of defects, such as lack of fusion. When the groove root gap G (Fig. 1), which is a gap (groove width) between root portions of the groove portions before the start of the welding, is greater than 18 mm, welding can be carried out by a conventional operation method. Accordingly, the present invention is directed to cases where the groove root gap G is 18 mm or less, which are cases that are expected to provide higher efficiency than a conventional operation method. On the other hand, when the groove root gap G is less than 7 mm, it may be difficult to perform a welding operation with three or more electrodes. Accordingly, the groove root gap G is specified to be within the range of 7 mm to 18 mm. Preferably, the range is 8 mm to 12 mm. Preferably, a backing member 7 is used for welding operations (see Fig. 2(a)).

[Multi-Electrode Multi-Layer Welding with Three or More Electrodes]

In the present invention, the joining is accomplished by performing multi-layer welding with the narrow groove described above, by using three or more electrodes for all of a first layer and second and optionally additional layers. Each of the layers may be formed by welding with multiple passes per layer. However, it is preferable, from the standpoint of welding operation efficiency, that each of the layers be formed by welding with a single pass per layer.
The number of electrodes is specified to be three or more because when the number is two or fewer, it is difficult to improve welding operation efficiency. Preferably, the number of electrodes is three or more and five or fewer. This is because when the number of electrodes is greater than five, non-uniformity of components is likely to occur in the weld metal, and, therefore, such a number is not preferable.
Fig. 2 illustrates an example of an operation procedure of the present invention for performing a welding operation with four electrodes. In Fig. 2, first, second, third, and fourth electrodes are indicated by 3, 4, 5, and 6; contact tips of the respective electrodes 3, 4, 5, and 6 are indicated by 3a, 4a, 5a, and 6a; welding wires supplied to the respective electrodes 3, 4, 5, and 6 are indicated by 3b, 4b, 5b, and 6b; and, the backing member is indicated by 7. Furthermore, weld lines (lines along which ends of the welding wires are moved) are indicated by 8; a weld bead in the first layer is indicated by 9; a molten pool (second layer) is indicated by 10; and a weld bead (second layer) being welded is indicated by 11. In the example of Fig. 2, the portions of the welding wires 3b and 4b protruding from the contact tips 3a and 4a are curved; however, in the present invention, this is a non-limiting example, and the protruding portions may be straight.

[Average Value of Equivalent Carbon Contents (Ceq) of Welding Wires Determined by Dividing Sum of the Equivalent Carbon Contents by Number of Electrodes: 0.400 mass% or greater]

An equivalent carbon content (Ceq), defined by equation (1) below, is an index that significantly affects a tensile strength of the weld metal.

$$Ceq = [C] + [Si]/24 + [Mn]/6 + [Ni]/40 + [Cr]/5 + [Mo]/4 + [V]/14 \qquad (1)$$

In the equation, [element] indicates a content (mass%) of the element in the welding wire, and when the element is not included, 0 is substituted.
An average value of the equivalent carbon contents (Ceq) of welding wires determined by dividing the sum of the equivalent carbon contents by the number of electrodes is hereinafter also referred to as an "average Ceq". The average Ceq is defined by equation (2) below.

$$Average\ Ceq = ([Ceq^{\#1}] + [Ceq^{\#2}] + [Ceq^{\#3}] + ... + [Ceq^{\#n}])/n \qquad (2)$$

In the equation [Ceq^{#i}] (i: 1 to n) is the Ceq of the welding wire of the ith electrode, and n is the total number of electrodes.
The present inventors conducted an experiment and made the following observations: ensuring a tensile strength of the weld metal of 550 MPa or greater requires that the Ceq of the weld metal be 0.320 mass% or greater, and achieving this requires that the average Ceq of the welding wires that are used be 0.400 mass% or greater. Accordingly, the average Ceq is specified to be 0.400 mass% or greater. Preferably, the average Ceq is 0.420 mass% or greater. When the average Ceq is excessively high, the toughness of the weld metal may be adversely affected, and, therefore, it is preferable that the upper limit of the average Ceq be 0.520 mass%.

[Ratio of Maximum to Minimum of Amounts of Heat Input of Electrodes: 1.40 or less]

The amount of metal deposited from the welding wires is affected by an amount of heat input of the electrodes. Even when the average Ceq is 0.400 mass% or greater, when the amounts of heat input of the electrodes are not uniform, it may be impossible to impart a sufficient Ceq to the weld metal. Specifically, when a ratio of the maximum to the minimum of the amounts of heat input of the electrodes (hereinafter also referred to as a "maximum/minimum ratio of amounts of heat input") is greater than 1.40, the Ceq of the weld metal may not become 0.320 mass% or greater. Accordingly, the maximum/minimum ratio of amounts of heat input is specified to be 1.40 or less.
Equation (3) below is a definition equation and defines the amount of heat input.

$$Amount\ of\ heat\ input\ (kJ/cm) = \{welding\ current\ (A) \times welding\ voltage\ (V)/1000\} \times 60/\{welding\ speed\ (cm/min)\} \qquad (3)$$

The amounts of heat input of the electrodes calculated according to the definition equation are compared with one another to select the maximum and minimum amounts of heat input, and a ratio of the selected maximum to selected minimum of the amounts of heat input is used as the maximum/minimum ratio of amounts of heat input. When the amounts of heat input of the electrodes are equal to one another, the maximum/minimum ratio of amounts of heat input is 1.00.
By setting a welding current, a welding voltage, and a welding speed with which the maximum/minimum ratio of amounts of heat input can become 1.40 or less, the Ceq of the weld metal can be consistently made to be 0.320 mass% or greater over its entire length, and, consequently, a tensile strength of 550 MPa or greater can be ensured. Preferably, the maximum/minimum ratio of amounts of heat input is 1.20 or less.

[Sum of Amounts of Heat Input of Electrodes: 10 kJ/cm to 60 kJ/cm]

When the sum of the amounts of heat input of the electrodes is less than 10 kJ/cm, the strength of the weld metal becomes excessively high, which raises concerns about a decrease in toughness and low-temperature cracking. On the other hand, when the sum of the amounts of heat input of the electrodes is greater than 60 kJ/cm, the strength of the weld metal decreases, which may make it impossible to ensure a tensile strength of the weld metal of 550 MPa or greater. Accordingly, the sum of the amounts of heat input of the electrodes is specified to be 10 kJ/cm to 60 kJ/cm. Preferably, the sum of the amounts of heat input of the electrodes is 15 kJ/cm to 45 kJ/cm.

In the present invention, the welding conditions regarding the average Ceq of the welding wires, the maximum/minimum ratio of amounts of heat input, and the sum of the amounts of heat input of the electrodes, described above, are essential, and additionally, preferred welding conditions are the following conditions.

[Polarity of Electrodes]

When a first electrode and a second electrode have the same polarity (e.g., both the first electrode and the second electrode are electrode-positive), an attractive electromagnetic force causes both of their arcs to be deflected inward, which results in a concentration of heat in a middle of the groove. As a result, sufficient melting may not be achieved on the groove surface. In contrast, in cases where one of the first electrode and the second electrode is electrode-negative (has straight polarity), and the other is electrode-positive (has reverse polarity) and where the positions of the first electrode and the second electrode are appropriately controlled, both of their magnetic fields due to the welding current generate a strong outward electromagnetic force, which results in repulsion between the arcs. As a result, a sufficient melt depth can be achieved on the groove surface. Thus, in the present invention, it is preferable that one of the first electrode and the second electrode be electrode-negative (have straight polarity) and that the other be electrode-positive (have reverse polarity). The polarity of the third electrode 5 and optionally additional electrodes is not particularly limited and may be electrode-negative (have straight polarity) or electrode-positive (have reverse polarity).

[Positions of First Electrode and Second Electrode]

In the case where narrow-groove multi-layer welding is performed with a single pass per layer, when only one electrode is used, the welding heat tends to be concentrated in a middle of the grove, which results in insufficient melting on the groove surface of the steel plates; consequently, defects due to incomplete fusion (cold lap), spatter deposited on the groove surface, slag entrainment, or the like are likely to occur. In particular, regarding the welding for forming the first layer, defects due to lack of fusion are likely to occur because the temperature of the steel plates is low, and the melt depth is small. Accordingly, in the present invention, it is preferable that, as illustrated in Fig. 2(b), the first electrode 3 and the second electrode 4 be located at positions along the weld lines 8, which are predetermined parallel weld lines.

[Distance a Between Ends of Welding Wires of First Electrode and Second Electrode: 5 mm to 16 mm]

Preferably, a distance a is adjusted to be within a range of 5 mm to 16 mm, where the distance a is a distance between ends of the welding wires 3b and 4b, which are supplied through the contact tips 3a and 4a, which are disposed at ends of respective welding torches of the first electrode 3 and the second electrode 4 (hereinafter, this distance is also simply referred to as a "first electrode-to-second electrode distance", see Fig. 2(b)). As referred to herein, the "distance between ends of the welding wires" is a distance between respective centers of the ends of the welding wires of the electrodes.

When the first electrode-to-second electrode distance a is less than 5 mm, a current (electrons) flows between the electrodes, which decreases heat present in the arcs, and as a result, sufficient melting may not be achieved on the groove surface 2. On the other hand, when the first electrode-to-second electrode distance a is greater than 16 mm, an outward electromagnetic force between the electrodes decreases in inverse proportion to the distance, thus, an arc repulsive force for overcoming an inward electromagnetic force generated by a current flowing along the groove surface 2 cannot be obtained, and, consequently, both of their arcs are deflected inward, which results in a concentration of heat in a middle of the groove. As a result, sufficient melting may not be achieved on the groove surface 2.

Furthermore, one challenge with narrow-groove welding is the inhibition of welding defects due to spatter deposited on the groove surface. However, because of the positioning of the first electrode 3 and the second electrode 4 along the predetermined parallel weld lines 8, 8, the polarities in which one of the electrodes is electrode-negative (has straight polarity) and in which the other is electrode-positive (has reverse polarity), and the first electrode-to-second electrode distance a adjusted to be within the range of 5 mm to 16 mm, it is possible to allow spatter to be absorbed into each of the molten metals, which results in inhibition of the deposition of spatter onto the groove surface, and, consequently, a sound weld can be obtained.

Thus, it is preferable that the first electrode-to-second electrode distance a be adjusted to be within the range of 5 mm to 16 mm.

[Angle $\alpha$ of Straight Line Connecting Ends of Welding Wires of First Electrode and Second Electrode: 60° or less]

In the present invention, the melting of the groove surface is ensured by utilizing repulsion between the arcs. When an angle $\alpha$ of a straight line with respect to a groove width direction (direction perpendicular to the weld line 8) is greater than 60°, where the straight line is a line connecting the ends of the welding wires of the first electrode 3 and the second electrode 4 to each other, a sufficient repulsive force between the arcs may not be generated, and, consequently, sufficient melting may not be achieved on the groove surface. Accordingly, it is preferable that the angle $\alpha$ of the straight line connecting the ends of the welding wires of the first electrode and the second electrode (hereinafter also simply referred to as a "first electrode and second electrode positioning angle", see Fig. 2(b)) be 60° or less. More preferably, the angle $\alpha$ is 50° or less. The first electrode and second electrode positioning angle $\alpha$ may be 0°.

[Diameter of Welding Wire: 1.0 mm to 1.6 mm]

Typically, welding wires for narrow-groove gas-shielded arc welding are manufactured with a diameter within a range of 0.6 mm to 2.0 mm. In general, the smaller the wire diameter, the higher the deposition rate due to Joule heating, provided that the same current is used for welding. Accordingly, it is preferable to select a relatively small wire diameter so as to realize a high-efficiency welding operation. On the other hand, when the wire diameter is excessively small, Joule heating causes the wire to be softened, which results in unstable welding. Accordingly, it is preferable that the diameter of the welding wires used in the present invention be within a range of 1.0 mm to 1.6 mm.

[Distance Between Adjacent Electrodes for Second Electrode and One or More Additional Electrodes: 10 mm to 100 mm]

A distance between adjacent electrodes for the second electrode 4 and one or more additional electrodes is a distance b or a distance c in the example of Fig. 2(b). The distance b is a distance between ends of the welding wires 4b and 5b, which are supplied through the contact tips 4a and 5a, which are disposed at ends of respective welding torches of the second electrode 4 and the third electrode 5 (hereinafter, this distance is also simply referred to as a "second electrode-to-third electrode distance"). The distance c is a distance between ends of the welding wires 5b and 6b, which are supplied through the contact tips 5a and 6a, which are disposed at ends of respective welding torches of the third electrode 5 and the fourth electrode 6 (hereinafter, this distance is also simply referred to as a "third electrode-to-fourth electrode distance"). Preferably, the distance between adjacent electrodes for the second electrode 4 and one or more additional electrodes, such as the distance b and the distance c, is within a range of 10 mm to 100 mm. This is because when the distance is within this range, resistance to hot cracking is improved. More preferably, the distance is 12 mm to 80 mm.

[Positions of Third Electrode and Optionally Additional Electrodes]

Regarding the welding for forming the first layer, when a weld deposit height is greater than the groove root gap G, the possibility of hot cracking increases. An effective way to avoid this is to position the third electrode 5 and optionally additional electrodes behind the first electrode 3 and the second electrode 4 and in a middle of the groove. This is because heat can be imparted to a middle of the bead by the third electrode 5 and optionally additional electrodes, and, consequently, a final solidification region can be changed. In addition, the number of layers can be consequently further reduced, which can significantly reduce the possibility of stacking defects associated with multi-layer welding. This is because uneven distribution of the weld metal in the groove can be prevented. As referred to herein, the "middle of the groove" may include a region $\pm 10\%$ or less from the middle of the groove portion in the groove root gap G.

[Shielding Gas: Mixed Gas Containing $CO_2$ Gas in Amount of 20 vol.% or Greater]

An oxygen content of the weld metal is significantly affected by a composition of a shielding gas, and, therefore, the shielding gas to be used for the narrow-groove gas-shielded arc welding of the present invention is preferably a mixed gas containing $CO_2$ gas in an amount of 20 vol.% or greater, with the balance being an inert gas, such as Ar. More preferably, the shielding gas is a single gas containing $CO_2$ gas in an amount of 100 vol.%. In the present invention, it is preferable that a concentration of oxygen in the weld metal, which dominates the melt fluidity of the weld metal, be high so that the convection of the weld metal can be directed outward from a middle and, thus, that a large melt depth can be consistently achieved in a root portion of the steel plates in the groove.

[REM Content of Welding Wire: 0.005 mass% to 0.060 mass%]

Rare earth metals (REM) are elements effective for refining inclusions present in the weld metal and improving toughness for a welding operation. A welding wire containing REM may be supplied to at least one straight-polarity electrode to perform welding; in this case, fine droplets can be obtained, and stable transfer of the droplets can be achieved. This transfer of fine droplets inhibits the occurrence of spattering and enables stable gas-shielded arc welding even with straight polarity. Thus, in the present invention, it is preferable that a steel wire containing one or more rare earth metals (REM) be supplied to at least one straight-polarity electrode. Elements other than REM are present in appropriate amounts that are typical and in accordance with a grade (steel grade) of the welding wire, as described in JIS Z 3312.

When the REM content is less than 0.005 mass%, the obtaining of fine droplets and the achievement of stable transfer of droplets are difficult. On the other hand, when the REM is present in an amount greater than 0.060 mass%, cracking occurs during the process of manufacturing the wire, and as a result, the manufacture of the welding wire becomes difficult. Accordingly, the REM content is preferably within a range of 0.005 mass% to 0.060 mass%. More preferably, the REM content is 0.010 mass% to 0.055 mass%.

[Other Welding Conditions]

In the present invention, conditions other than the above-described welding conditions need not be particularly limited and may be those in accordance with a common procedure. Examples of the conditions include a welding voltage of 32 V to 37 V, a welding speed of 30 cm/min to 90 cm/min, and a welding wire protrusion length of 15 mm to 30 mm.

As illustrated in Fig. 2(a), a supply angle φ for supplying each of the welding wires 3b and 4b of the first electrode 3 and the second electrode 4 toward the root of the groove (hereinafter, this angle is also simply referred to as a "supply angle φ") may be within a range of 0° to 15° with respect to a perpendicular line. Regarding the supply angle φ, a direction pointing to a corresponding portion of the groove surface is designated as "+". As referred to herein, the "perpendicular line" is a line perpendicular to the root of the groove. Furthermore, a distance d between a side edge portion at the end of each of the welding wires of the first electrode 3 and the second electrode 4 and a corresponding root portion of the groove surface 2 (hereinafter, this distance is also simply referred to as a "distance d") may be within a range of 0.1 mm to 3.0 mm. Furthermore, a radius of curvature of the welding wires supplied through the contact tips 3a and 4a disposed at the ends of the respective welding torches of the first electrode 3 and the second electrode 4 (hereinafter, this radius of curvature is also simply referred to as a "radius of curvature of the wires") may be 150 mm to 500 mm.

[Supply Angle φ for Supplying Welding Wires Toward Root of Groove: 0° to 15° with respect to perpendicular line]

Arcs have a directionality, that is, have a property of tending to be oriented in a direction to which each of the ends of electrodes (welding wires) points. An advantageous way to effectively utilize the directionality of arcs for the melting of the groove surface is to enable the direction to which each of the ends of the electrodes points to be oriented toward the groove surface, and the direction to which each of the ends of the electrodes points significantly depends on the supply angle φ for supplying the welding wires through the contact tips disposed at the ends of the respective welding torches. The supply angle φ for supplying the welding wires toward the root of the groove through the contact tips disposed at the ends of the respective welding torches is illustrated in Fig. 2(a).

When the supply angle φ for supplying each of the welding wires 3b and 4b toward the root of the groove through the contact tips 3a and 4a disposed at the ends of the respective welding torches is less than 0° with respect to the perpendicular line, a current flows to a path having a lower resistance. As a result, the arc climbs upward (arc climbing) along the wires, which are electrodes, and, consequently, it becomes difficult to maintain the melt in a target portion of the groove surface 2, in particular, in a root portion. On the other hand, when the supply angle φ for supplying the welding wires toward the root of the groove through the contact tips is greater than 15° with respect to the perpendicular line, the arcs point to the groove surface 2 to an excessive extent, which leads to a convex shape of the weld bead; consequently, regarding the welding for forming the first layer and additional layers, melting by the arcs is not sufficiently achieved, which increases the likelihood of the occurrence of welding defects. Accordingly, the supply angle φ for supplying each of the welding wires 3b and 4b of the first electrode 3 and the second electrode 4 toward the root of the groove is preferably within a range of 0° to 15° with respect to the perpendicular line. More preferably, the supply angle φ is 5° to 12°.

The supply angle φ for supplying each of the welding wires of the first electrode 3 and the second electrode 4 toward the root of the groove is the same as a slope of the contact tips 3a and 4a, particularly, a slope of the ends of the contact tips, and, accordingly, the supply angle φ for supplying the welding wire can be controlled with the slope of the ends of the contact tips.

[Distance d Between Side Edge Portion at End of Each of Welding Wires of First Electrode and Second Electrode and Corresponding Portion of Groove Surface 2 of Steel Plates: 0.1 mm to 3.0 mm]

Preferably, the distance d (Fig. 2(a)) between a side edge portion at the end of each of the welding wires of the first electrode 3 and the second electrode 4 and a corresponding root portion of the groove surface 2 of the steel plates is 0.1 mm to 3.0 mm. When the distance d is less than 0.1 mm, the arc may be formed between an upper portion of the wire and the groove surface 2, and, consequently, the groove surface 2 may not be efficiently melted in the root portion of the steel plates. On the other hand, when the distance d is greater than 3.0 mm, the arc is distant from the groove surface 2, and, consequently, the groove surface 2 may not be efficiently melted. Accordingly, the distance d is preferably 0.1 mm to 3.0 mm. More preferably, the distance d is 0.5 mm to 2.0 mm, and even more preferably, 0.5 mm to 1.0 mm. As referred to herein, the "side edge portion at the end of the welding wire" is a side edge portion closer to the groove surface 2 of the steel plates that are to be melted by the respective electrodes.

[Radius of Curvature of Welding Wires to Be Fed to Contact Tips: 150 mm to 500 mm]

The present invention uses contact tips having a bent end. This is to control the supply angle $\varphi$ for supplying the welding wires 3b and 4b through the contact tips 3a and 4a disposed at the ends of the respective welding torches of the first electrode 3 and the second electrode 4. Thus, the welding wires pass through the contact tips having a bent end. It is, therefore, preferable that the welding wires be bent beforehand with a so-called three-roll bending machine, or the like, so as to be more smoothly passed through the contact tips. When the radius of curvature of the welding wires is less than 150 mm, wire feeding resistance increases, and, therefore, the welding wires cannot be stably fed, which makes it difficult to maintain the arc. On the other hand, when the radius of curvature of the welding wires is greater than 500 mm, the effect of reducing the wire feeding resistance due to a contact tip having a bent end is not produced, and, therefore, the welding wires also cannot be stably fed, which makes it difficult to maintain the arc. Thus, it is preferable that the radius of curvature of the welding wires 3b and 4b to be fed to the contact tips 3a and 4a of the first electrode 3 and the second electrode 4 be 150 mm to 500 mm. More preferably, the radius of curvature is 175 mm to 475 mm.

EXAMPLES

The present invention will now be further described based on Examples. Note that the Examples below are provided merely to illustrate the present invention in more detail and are not intended to limit the scope of the present invention.

Welded joints were prepared by performing multi-electrode multi-layer narrow-groove gas-shielded arc welding, with a single pass per layer, on base steels (tensile strength: 550 MPa or greater) each having a groove. The welding conditions for each numbered case are shown in Tables 1 to 3. The grooves were formed by gas cutting, and the shape of the groove of each numbered case is shown in Table 1. For each numbered operation, a third electrode and optionally additional electrode were positioned behind the first electrode and the second electrode and in a middle of the groove. The supply angle $\varphi$ was 8°. The radius of curvature of the wires was 300 mm.

In each of the prepared welded joints, a cross section of the weld was etched with nital, and subsequently, an investigation was performed to see whether there were welding defects (hot cracking and lack of fusion). It was observed that none of the welded joints had the welding defects.

The Ceq of the weld metals of the welded joints was determined by chemical analysis, and it was found that in Invention Examples, the Ceq was 0.320 mass% or greater, and that in Comparative Examples, the Ceq was in a range of less than 0.320 mass%.

Round bar tensile test specimens were cut from the weld metals of the welded joints in accordance with the specifications of JIS Z 3111, to evaluate the tensile strength of the weld metals. The results of the evaluation are shown in Table 4. As demonstrated in Table 4, all of the weld metals in Invention Examples had a tensile strength of 550 MPa or greater. In contrast, the weld metals of Comparative Examples Nos. 8 to 10 had a tensile strength of less than 550 MPa. In Comparative Example No. 8, the average Ceq was less than 0.400 mass%; in Comparative Example No. 9, the sum of the amounts of heat input was greater than 60 kJ/cm; and in Comparative Example No. 10, the maximum/minimum ratio of amounts of heat input was greater than 1.40.

[Table 1]

| No. | Steel Grade of Base Steel | Thickness t of Base Steel (mm) | Shape of Groove | | | Number of Electrodes Used | Number of Welding Passes | Remarks |
|-----|-----|-----|-----|-----|-----|-----|-----|-----|
| | | | Shape | Groove Angle θ (°) | Groove Root Gap G (mm) | | | |
| 1 | 550 MPa-Class Steel | 100 | V Shape | 5 | 10 | 3 | 18 | Invention Example |

(continued)

| No. | Steel Grade of Base Steel | Thickness t of Base Steel (mm) | Shape of Groove | | | Number of Electrodes Used | Number of Welding Passes | Remarks |
|---|---|---|---|---|---|---|---|---|
| | | | Shape | Groove Angle θ (°) | Groove Root Gap G (mm) | | | |
| 2 | 570 MPa-Class Steel | 80 | V Shape | 10 | 9 | 3 | 15 | Invention Example |
| 3 | 550 MPa-Class Steel | 70 | V Shape | 6 | 12 | 3 | 9 | Invention Example |
| 4 | 550 MPa-Class Steel | 50 | V Shape | 5 | 10 | 3 | 8 | Invention Example |
| 5 | 550 MPa-Class Steel | 45 | V Shape | 8 | 8 | 3 | 4 | Invention Example |
| 6 | 590 MPa-Class Steel | 25 | I Shape | 0 | 10 | 3 | 4 | Invention Example |
| 7 | 550 MPa-Class Steel | 65 | V Shape | 10 | 11 | 3 | 19 | Invention Example |
| 8 | 550 MPa-Class Steel | 100 | V Shape | 5 | 10 | 3 | 11 | Comparative Example |
| 9 | 550 MPa-Class Steel | 80 | V Shape | 8 | 11 | 3 | 7 | Comparative Example |
| 10 | 550 MPa-Class Steel | 25 | I Shape | 0 | 12 | 3 | 3 | Comparative Example |
| 11 | 550 MPa-Class Steel | 80 | V Shape | 5 | 10 | 4 | 14 | Invention Example |
| 12 | 550 MPa-Class Steel | 80 | V Shape | 5 | 10 | 4 | 14 | Invention Example |

[Table 2]

| No. | Composition of Shielding Gas | Welding Speed (cm/min) | Welding Conditions for First Electrode | | | | | Welding Conditions for Second Electrode | | | | | Welding Conditions for Third Electrode | | | | | Welding Conditions for Fourth Electrode | | | | | Average Ceq (mass%) | Sum of Amounts of Heat Input (kJ/cm) | Maximum/Minimum Ratio of Amounts of Heat Input | Remarks |
|---|---|---|---|---|---|---|---|---|---|---|---|---|---|---|---|---|---|---|---|---|---|---|---|---|---|---|
| | | | Polarity | Ceq of Wire (mass%) | Current (A) | Voltage (V) | Amount of Heat Input (kJ/cm) | Polarity | Ceq of Wire (mass%) | Current (A) | Voltage (V) | Amount of Heat Input (kJ/cm) | Polarity | Ceq of Wire (mass%) | Current (A) | Voltage (V) | Amount of Heat Input (kJ/cm) | Polarity | Ceq of Wire (mass%) | Current (A) | Voltage (V) | Amount of Heat Input (kJ/cm) | | | | |
| 1 | 100%CO$_2$ | 60 | W- | 0.508 | 275 | 34 | 9.35 | W+ | 0.425 | 275 | 35 | 9.63 | W+ | 0.508 | 300 | 32 | 9.60 | | | | | | 0.480 | 29 | 1.03 | Invention Example |
| 2 | 100%CO$_2$ | 55 | W- | 0.495 | 300 | 33 | 10.80 | W+ | 0.473 | 310 | 33 | 11.16 | W- | 0.495 | 280 | 32 | 9.77 | | | | | | 0.488 | 32 | 1.14 | Invention Example |
| 3 | 100%CO$_2$ | 40 | W- | 0.505 | 285 | 33 | 14.11 | W+ | 0.433 | 290 | 33 | 14.36 | W- | 0.495 | 310 | 33 | 15.35 | | | | | | 0.478 | 44 | 1.09 | Invention Example |
| 4 | 100%CO$_2$ | 60 | W- | 0.473 | 300 | 34 | 10.20 | W+ | 0.425 | 300 | 34 | 10.20 | W+ | 0.492 | 275 | 32 | 8.80 | | | | | | 0.463 | 29 | 1.16 | Invention Example |
| 5 | 100%CO$_2$ | 35 | W- | 0.495 | 290 | 32 | 15.91 | W+ | 0.435 | 290 | 34 | 16.90 | W- | 0.485 | 290 | 33 | 16.41 | | | | | | 0.472 | 49 | 1.06 | Invention Example |
| 6 | 80%Ar-20%CO$_2$ | 70 | W- | 0.505 | 280 | 32 | 7.68 | W+ | 0.432 | 285 | 33 | 8.06 | W+ | 0.505 | 340 | 34 | 9.91 | | | | | | 0.481 | 26 | 1.29 | Invention Example |
| 7 | 100%CO$_2$ | 90 | W- | 0.491 | 310 | 33 | 6.82 | W+ | 0.445 | 315 | 33 | 6.93 | W- | 0.473 | 300 | 33 | 6.60 | | | | | | 0.470 | 20 | 1.05 | Invention Example |
| 8 | 80%Ar-20%CO$_2$ | 40 | W- | 0.395 | 300 | 34 | 15.30 | W+ | 0.385 | 310 | 33 | 15.35 | W+ | 0.395 | 320 | 35 | 16.80 | | | | | | 0.392 | 47 | 1.10 | Comparative Example |
| 9 | 100%CO$_2$ | 28 | W- | 0.491 | 305 | 34 | 22.22 | W+ | 0.422 | 305 | 35 | 22.88 | W- | 0.430 | 320 | 34 | 23.31 | | | | | | 0.448 | 68 | 1.05 | Comparative Example |
| 10 | 100%CO$_2$ | 45 | W- | 0.425 | 265 | 32 | 11.31 | W+ | 0.385 | 355 | 34 | 16.09 | W- | 0.425 | 270 | 33 | 11.88 | | | | | | 0.412 | 39 | 1.42 | Comparative Example |
| 11 | 100%CO$_2$ | 80 | W- | 0.508 | 280 | 32 | 6.72 | W+ | 0.425 | 290 | 33 | 7.18 | W+ | 0.425 | 290 | 33 | 7.18 | W+ | 0.473 | 280 | 33 | 6.93 | 0.458 | 28 | 1.07 | Invention Example |
| 12 | 100%CO$_2$ | 80 | W+ | 0.432 | 290 | 33 | 7.18 | W- | 0.495 | 280 | 32 | 6.72 | W+ | 0.425 | 300 | 33 | 7.43 | W- | 0.508 | 270 | 32 | 6.48 | 0.465 | 28 | 1.15 | Invention Example |

Note) In the "Polarity" column, "W-" indicates electrode-negative (straight polarity), and "W+" indicates electrode-positive (reverse polarity).

[Table 3]

| No. | Welding Conditions for First Electrode | | | Welding Conditions for Second Electrode | | | | | Welding Conditions for Third Electrode | | | Welding Conditions for Fourth Electrode | | | Remarks |
|---|---|---|---|---|---|---|---|---|---|---|---|---|---|---|---|
| | Diameter of Wire (mm) | REM in Wire (mass%) | Distance d (mm) | Diameter of Wire (mm) | REM in Wire (mass%) | Distance a (mm) | Angle α (°) | Distance d (mm) | Diameter of Wire (mm) | REM in Wire (mass%) | 2nd Electrode-to-3rd Electrode Distance b (mm) | Diameter of Wire (mm) | REM in Wire (mass%) | 3rd Electrode-to-4th Electrode Distance c (mm) | |
| 1 | 1.2 | 0.025 | 1.0 to 2.5 | 1.2 | - | 14 | 56 | 1.0 to 2.5 | 1.2 | - | 16 | | | | Invention Example |
| 2 | 1.2 | 0.030 | 0.2 to 3.0 | 1.2 | - | 13 | 49 | 0.2 to 3.0 | 1.2 | 0.025 | 19 | | | | Invention Example |
| 3 | 1.2 | 0.025 | 1.5 to 3.0 | 1.2 | - | 15 | 53 | 1.5 to 3.0 | 1.2 | 0.025 | 18 | | | | Invention Example |
| 4 | 1.2 | 0.025 | 0.5 to 1.2 | 1.2 | - | 13 | 45 | 0.5 to 1.2 | 1.2 | - | 16 | | | | Invention Example |
| 5 | 1.2 | 0.025 | 1.5 to 3.0 | 1.2 | - | 7 | 45 | 1.5 to 3.0 | 1.2 | 0.030 | 20 | | | | Invention Example |
| 6 | 1.2 | 0.030 | 0.1 to 1.0 | 1.2 | - | 13 | 51 | 0.1 to 1.0 | 1.2 | - | 16 | | | | Invention Example |
| 7 | 1.2 | 0.030 | 0.5 to 3.0 | 1.2 | - | 14 | 45 | 0.5 to 3.0 | 1.2 | 0.025 | 11 | | | | Invention Example |
| 8 | 1.2 | 0.025 | 0.5 to 1.5 | 1.2 | - | 15 | 53 | 0.5 to 1.5 | 1.2 | - | 22 | | | | Comparative Example |
| 9 | 1.2 | 0.025 | 0.2 to 3.0 | 1.2 | - | 16 | 49 | 0.2 to 3.0 | 1.2 | 0.025 | 19 | | | | Comparative Example |
| 10 | 1.2 | 0.030 | 0.1 to 1.0 | 1.2 | - | 15 | 48 | 0.1 to 1.0 | 1.2 | 0.030 | 16 | | | | Comparative Example |
| 11 | 1.2 | 0.030 | 0.5 to 2.0 | 1.2 | - | 15 | 53 | 0.5 to 2.0 | 1.2 | - | 11 | 1.2 | - | 15 | Invention Example |

| No. | Welding Conditions for First Electrode | | | Welding Conditions for Second Electrode | | | | | Welding Conditions for Third Electrode | | | Welding Conditions for Fourth Electrode | | | Remarks |
|---|---|---|---|---|---|---|---|---|---|---|---|---|---|---|---|
| | Diameter of Wire (mm) | REM in Wire (mass%) | Distance d (mm) | Diameter of Wire (mm) | REM in Wire (mass%) | Distance a (mm) | Angle $\alpha$ (°) | Distance d (mm) | Diameter of Wire (mm) | REM in Wire (mass%) | 2nd Electrode-to-3rd Electrode Distance b (mm) | Diameter of Wire (mm) | REM in Wire (mass%) | 3rd Electrode-to-4th Electrode Distance c (mm) | |
| 12 | 1.2 | - | 0.5 to 1.5 | 1.2 | 0.030 | 13 | 48 | 0.5 to 1.5 | 1.2 | - | 16 | 1.2 | 0.025 | 10 | Invention Example |

Note 1) The distance d is a distance d between a side edge portion at an end of each of the welding wires of the first electrode and the second electrode and a corresponding bottom portion of a groove surface of steel plates.
Note 2) The distance a is a first electrode-to-second electrode distance a.
Note 3) The angle $\alpha$ is a first electrode and second electrode positioning angle $\alpha$.

[Table 4]

| No. | Average Ceq (mass%) | Sum of Amounts of Heat Input (kJ/cm) | Maximum/Minimum Ratio of Amounts of Heat Input | Tensile Strength of Weld Metal (MPa) | Remarks |
|---|---|---|---|---|---|
| 1 | 0.480 | 29 | 1.03 | 695 | Invention Example |
| 2 | 0.488 | 32 | 1.14 | 682 | Invention Example |
| 3 | 0.478 | 44 | 1.09 | 660 | Invention Example |
| 4 | 0.463 | 29 | 1.16 | 644 | Invention Example |
| 5 | 0.472 | 49 | 1.06 | 605 | Invention Example |
| 6 | 0.481 | 26 | 1.29 | 783 | Invention Example |
| 7 | 0.470 | 20 | 1.05 | 688 | Invention Example |
| 8 | 0.392 | 47 | 1.10 | 498 | Comparative Example |
| 9 | 0.448 | 68 | 1.05 | 536 | Comparative Example |
| 10 | 0.412 | 39 | 1.42 | 515 | Comparative Example |
| 11 | 0.458 | 28 | 1.07 | 650 | Invention Example |
| 12 | 0.465 | 28 | 1.15 | 655 | Invention Example |

Reference Signs List

1 steel plate

2 groove surface

3 first electrode

4 second electrode

5 third electrode

6 fourth electrode

3a, 4a, 5a, 6a contact tip

3b, 4b, 5b, 6b welding wire

7 backing member

8 weld line

9 weld bead in first layer

10 molten pool (second layer)

11 weld bead (second layer) being welded

**Claims**

1. A narrow-groove gas-shielded arc welding method comprising joining steel plates together by narrow-groove multi-layer welding, the steel plates having a thickness t of 22 mm or greater, the narrow-groove multi-layer welding using a groove angle θ of 25° or less and a groove root gap G of 7 mm to 18 mm, wherein

the multi-layer welding is multi-electrode welding using three or more electrodes,
welding wires have respective equivalent carbon contents (Ceq), and an average value of the equivalent carbon contents is 0.400 mass% or greater, where the equivalent carbon contents are each defined by equation (1) below, and where the average value is determined by dividing a sum of the equivalent carbon contents by the number of electrodes,
the electrodes have respective amounts of heat input, and a ratio of a maximum to a minimum of the amounts of heat input is 1.40 or less, and
a sum of the amounts of heat input of the electrodes is 10 kJ/cm to 60 kJ/cm:

$$Ceq = [C] + [Si]/24 + [Mn]/6 + [Ni]/40 + [Cr]/5 + [Mo]/4 + [V]/14 \tag{1}$$

where [element] indicates a content (mass%) of the element in each of the welding wires, and when the element is not included, 0 is substituted.

2. The narrow-groove gas-shielded arc welding method according to Claim 1, wherein

one of a first electrode and a second electrode is electrode-negative (has straight polarity), and the other is electrode-positive (has reverse polarity),
a distance a between ends of welding wires supplied through contact tips disposed at ends of respective welding torches of the first electrode and the second electrode is 5 mm to 16 mm,
an angle α of a straight line with respect to a groove width direction is 60° or less, where the straight line is a line connecting the ends of the welding wires of the first electrode and the second electrode to each other,
a diameter of the welding wires that are used in the electrodes is within a range of 1.0 mm to 1.6 mm, and
a distance between adjacent electrodes for the second electrode and one or more additional electrodes is 10 mm to 100 mm.

3. The narrow-groove gas-shielded arc welding method according to Claim 2, wherein a third electrode and optionally additional electrodes are positioned behind the first electrode and the second electrode and in a middle of the groove.

4. The narrow-groove gas-shielded arc welding method according to any one of Claims 1 to 3, wherein a mixed gas containing $CO_2$ gas in an amount of 20 vol.% or greater is used as a shielding gas.

5. The narrow-groove gas-shielded arc welding method according to any one of Claims 1 to 4, wherein at least one welding wire used in a straight-polarity electrode contains one or more rare earth metals (REM) in an amount of 0.005 mass% to 0.060 mass%.

FIG. 1

# FIG. 2

(a)

(b)

WELDING DIRECTION

## INTERNATIONAL SEARCH REPORT

| International application No. |
| --- |
| **PCT/JP2024/010618** |

| | |
| --- | --- |
| **A.** | **CLASSIFICATION OF SUBJECT MATTER** |

*B23K 9/173*(2006.01)i; *B23K 9/00*(2006.01)i; *B23K 9/16*(2006.01)i; *B23K 35/30*(2006.01)i
FI:   B23K9/173 D; B23K9/173 E; B23K9/16 J; B23K9/00 109; B23K35/30 320A

According to International Patent Classification (IPC) or to both national classification and IPC

| | |
| --- | --- |
| **B.** | **FIELDS SEARCHED** |

Minimum documentation searched (classification system followed by classification symbols)

B23K9/173; B23K9/00; B23K9/16; B23K35/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | JP 2015-223605 A (JFE STEEL CORPORATION) 14 December 2015 (2015-12-14) paragraphs [0022]-[0054], fig. 1-6 | 1-5 |
| A | WO 2019/182081 A1 (JFE STEEL CORPORATION) 26 September 2019 (2019-09-26) paragraphs [0019]-[0047], fig. 1, 2 | 1-5 |

☐ Further documents are listed in the continuation of Box C.      ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 May 2024** | **21 May 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/010618**

| Patent document cited in search report | | | Publication date (day/month/year) | Patent family member(s) | | | Publication date (day/month/year) |
|---|---|---|---|---|---|---|---|
| JP | 2015-223605 | A | 14 December 2015 | (Family: none) | | | |
| WO | 2019/182081 | A1 | 26 September 2019 | KR | 10-2020-0118883 | A | |
| | | | | CN | 111886104 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6137053 B